# EUROPÄISCHE PATENTSCHRIFT

(11) **EP 2 732 060 B1**
(45) Veröffentlichungstag und Bekanntmachung des Hinweises auf die Patenterteilung: **06.12.2017**
(21) Anmeldenummer: 12780164.5
(22) Anmeldetag: 24.10.2012
(51) Int. Cl.: C22C 38/00

(54) **HÄRTBARER STAHL FÜR HEBE-, ANSCHLAG-, SPANN- UND/ODER ZURRMITTEL SOWIE VERBINDUNGSELEMENTE, BAUELEMENT DER HEBE-, ANSCHLAG-, SPANN- UND/ODER ZURRTECHNIK, VERBINDUNGSELEMENT SOWIE VERFAHREN ZU DEREN HERSTELLUNG**
HARDENING STEEL FOR LIFTING, TENSIONING AND / OR LOAD SECURING DEVICES AND FASTENERS, COMPONENT AND METHOD FOR PRODUCING
ACIER DURCISSABLE POUR MOYENS DE LEVAGE, D'ACCROCHAGE, DE SERRAGE ET/OU D'ARRIMAGE ET ÉLÉMENTS DE LIAISON, ÉLÉMENT DE CONSTRUCTION DE LA TECHNIQUE DE LEVAGE, D'ACCROCHAGE, DE SERRAGE ET/OU D'ARRIMAGE, ÉLÉMENT DE LIAISON ET PROCÉDÉ DE FABRICATION ASSOCIÉ

(30) Priorität: 26.10.2011 DE 102011054840; 30.11.2011 DE 202011052154 U
(43) Veröffentlichungstag der Anmeldung: 21.05.2014
(73) Patentinhaber: RUD Ketten Rieger & Dietz GmbH u. Co. KG, 73432 Aalen (DE)
(72) Erfinder: SINZ, Rolf, 73540 Heubach (DE)
(74) Vertreter: Grünecker Patent- und Rechtsanwälte PartG mbB
(86) Internationale Anmeldenummer: PCT/EP2012/071056
(87) Internationale Veröffentlichungsnummer: WO 2013/060724

(56) Entgegenhaltungen:
- DE-A1- 4 124 704
- DE-A1-102005 034 140
- JP-A- 2 077 557
- JP-A- 62 202 052
- JP-A- 62 202 053
- JP-A- 2009 280 870

## Beschreibung

Die Erfindung betrifft einen härtbaren Stahl für Hebe-, Anschlag-, Spann- und/oder Zurrmittel der Güteklasse 8 und höher. Speziell betrifft die Erfindung die Verwendung dieses Stahls für Hebe-, Anschlag-, Spann- und/oder Zurrmittel, insbesondere für Ketten oder Kettenglieder, und für Verbindungselemente, beispielsweise Schrauben. Weiter betrifft die Erfindung ein Verbindungselement, wie eine Schraube, und Bauelement der Hebe-, Anschlag-, Spann- und/oder Zurrtechnik aus diesem Stahl. Ferner betrifft die Erfindung ein Verfahren zur Herstellung eines solchen Verbindungs-Bauelements, insbesondere die Verarbeitung eines Stahls in einem Kettenform- und Härteprozess.

Eine Vielzahl an Zusammensetzungen für Stahl ist schon bekannt, auch für Stähle, die in Hebe-, Anschlag-, Spann- und/oder Zurrmitteln verwendet werden. Hebe-, Anschlag-, Spann- und/oder Zurrmittel müssen bei hohen Sicherheitsanforderungen große Lasten heben oder festzurren, oder ein Anschlagen bzw. Befestigen der Hebe-, Anschlag-, Spann- und/oder Zurrmittel an der Last oder an Befestigungsmitteln erlauben.

Aus der DE 41 24 704 A1 sind verschiedene Zusammensetzung für einen warmverformten, unvergüteten Stahl, der keine Wärmebehandlung benötigt, bekannt. Die JP 2 077 557 A offenbart Stähle für Druckgefäße. Aus der DE 10 2005 034 140 A1 ist ein Stahl für eine hochfeste Stahlkette bekannt. In der JP 62 202 052 A werden verschiedene Zusammensetzungen für Kettenstähle offenbart. Die JP 62 202 053 A offenbart ebenfalls verschiedene Zusammensetzungen von Kettenstählen. Die JP 2009 280 870 A offenbart verschiedene Zusammensetzungen von Stählen für Stahlplatten für Achsengehäuse.

In Abhängigkeit von ihrer mechanischen Belastbarkeit werden die Hebe-, Anschlag-, Spann-und/oder Zurrmittel in unterschiedliche Güteklassen oder Grade unterteilt. Die Güteklassen oder Grade sind meist genormt, die Güteklasse 8 beispielsweise nach ISO 3076, 3077 oder, in Deutschland DIN EN 818-2, 818-7 und die Güteklasse 10 nach PAS 1061.

Je höher eine Güteklasse ist, umso höhere Lasten kann das Hebe-, Anschlag-, Spann- und/oder Zurrmittel bei gleicher Querschnittsfläche tragen. Ein Hebe-, Anschlag-, Spann- und/oder Zurrmittel einer höheren Güteklasse kann also bei gleichem Gewicht eine höhere Last tragen als ein Hebe-, Anschlag-, Spann- und/oder Zurrmittel einer niedrigeren Güteklasse und ist somit im Betrieb leichter zu handhaben.

Eine Rundstahlkette der Güteklasse 8 mit den Maßen Ø 16 mm x 48 mm muss beispielsweise eine Mindestbruchkraft (BF) von mindestens 320 Kilonewton, eine entsprechende Kette der Güteklasse 10 eine Mindestbruchkraft von mindestens 400 Kilonewton aufweisen. Entsprechendes gilt für die Einteilung nach US-Normen in "Grade 8" und "Grade 10".

Für solche Bauelemente der Güteklassen 8 und höher wurden bisher Stähle verwendet, in denen Nickel enthalten ist. Beispielsweise zeigt die US 2007/0107808 A1 einen solchen Stahl. Da Nickel jedoch teuer ist, ist ein Verzicht auf Nickel oder eine Reduktion des Nickelanteiles wirtschaftlich sinnvoll. In Anbetracht der in den Güteklassen festgeschriebenen mechanischen Anforderungen an die Anlassbeständigkeit und die Tieftemperaturzähigkeit ist der Verzicht auf Nickel nicht unproblematisch. Insbesondere wird Nickel bei Stählen für Hebe-, Anschlag-, Spann- und/oder Zurrmittel als notwendig angesehen, weil die Kerbschlagzähigkeit nickellegierter Stähle (Ni > 0,8 Gew.-%) so hoch ist, dass im rauen Gebrauch auftretende Oberflächenschäden wie Kerben die Festigkeit insgesamt kaum beeinträchtigen.

Ein vergütetes Verbindungselement ist beispielsweise aus der DE 10 2008 041 391 A1 bekannt. Diese Schraube erzielt ihre hohe Festigkeit aufgrund eines Bainitgefüges. Nachteilig ist, dass ein solches Gefüge nur bei sehr genau kontrollierten Abkühl- und isothermen Umwandlungsvorgängen entstehen kann. Die DE 28 17 628 C2 befasst sich mit Stahllegierungen, die ein Bainitgefüge aufweisen.

Weitere hochfeste Schrauben sind beispielsweise aus der EP 1 728 883 bekannt.

Diese bekannten Verbindungselemente sind zwar hochfest, bei tiefen Temperaturen jedoch sehr spröde. Sie sind damit für Anwendungen im Tieftemperaturbereich, beispielsweise für einen Außeneinsatz in Berg-, Winter- oder Polarregionen ungeeignet.

Aufgabe der Erfindung ist es, eine Stahlzusammensetzung zu finden, die mit einem geringen Anteil an Nickel oder ohne Nickel auskommt und die Anforderungen an die mechanischen Eigenschaften der Güteklasse 8 oder höher erfüllt. Insbesondere soll ein Stahl gefunden werden, der eine hohe Kerbschlagarbeit bei tiefen Temperaturen, beispielsweise -40°C, und bei hohen Temperaturen, z.B. +400°C, und gleichzeitig eine ausreichende Festigkeit sowie Anlassbeständigkeit hat. Da die Bauelemente aus der Hebe-, Anschlag-, Spann- und/oder Zurrtechnik verschleißgefährdete Oberflächen aufweisen, muss der Stahl auch härtbar sein. Ferner soll er schmiedefähig sein, um besonders belastbare Bauelemente kostengünstig herstellen zu können.

Die Erfindung setzt sich ferner zum Ziel, das eingangs genannte Verbindungselement dahingehend zu verbessern, dass bei einer hohen Belastbarkeit, also einer hohen Zugfestigkeit, bei tiefen Temperaturen kein sprödes Bruchverhalten auftritt.

Diese Aufgabe wird durch den erfindungsgemäßen niedriglegierten Stahl mit der folgenden Zusammensetzung in Gewichtsprozent gelöst:
Kohlenstoff 0,17 bis 0,25, bevorzugt 0,20 bis 0,23,
Nickel 0,00 bis 0,25, bevorzugt 0,00 bis 0,15 bzw. 0,10,
Molybdän 0,15 bis 0,60, bevorzugt 0,30 bis 0,50,
Niob 0,01 bis 0,08 und/oder Titan: 0,005 bis 0,1 und/oder Vanadium: ≤ 0,16, wobei der Anteil an Niob bevorzugt zwischen 0,01 und 0,06 liegen kann,
Aluminium 0 bis 0,050, bevorzugt 0,020 bis 0,040,
Chrom 0,01 bis 0,50, bevorzugt 0,20 bis 0,40,
Silizium 0,1 bis 0,3, bevorzugt 0,1 bis 0,25,
Mangan 1,40 bis 1,60,
Phosphor weniger als 0,015,
Schwefel weniger als 0,015,
Kupfer weniger als 0,20,
Stickstoff 0,006 bis 0,014,
Rest Eisen und unvermeidbare Verunreinigungen.

Der erfindungsgemäße Stahl erfüllt bei Ketten die mechanischen Anforderungen ab Güteklasse 8, insbesondere der Güteklassen 8 und 10 bezüglich der Zugfestigkeit und der Kerbschlagarbeit. So haben Versuche der Anmelderin gezeigt, dass ein Werkstück mit 16 mm Durchmesser, das bei etwa 880°C etwa eine halbe Stunde gehalten, abgeschreckt und anschließend bei etwa 450°C für etwa eine Stunde gehalten wurde, im Zugversuch Werte von Rₘ (Zugfestigkeit) von knapp über 1200 MPa, A₅ um die 14 % (Bruchdehnung), Z um 65 % (Brucheinschnürung) aufweist. Das Werkstück weist eine Kerbschlagarbeit von ca. 140 Joule bei Raumtemperatur auf. Ein Verbindungselement aus diesem Stahl weist bei sehr hohen Festigkeiten eine extrem große Tieftemperaturzähigkeit auf, so dass es selbst im geschädigten Zustand bei sehr niedrigen Temperaturen noch hohe Sicherheiten bietet.

Die bekannten Schrauben der höchsten Festigkeitsklassen 14.8, 15.8 und/oder 16.8 weisen bereits bei Raumtemperatur meist eine geringe Zähigkeit auf. Bei niedrigen Temperaturen unterhalb des Gefrierpunktes neigen sie somit zwangsläufig zu Sprödbruch. Dieses Bruchverhalten ist bei einer Reihe von Anwendungen, insbesondere bei Schrauben für Anschlag-, Hebe- und Zurrmitteln nicht tolerierbar, da diese oft unter sehr extremen klimatischen Bedingungen, wie beispielsweise auf Schiffen in der Polarregion oder zum Lastentransport in Bergregionen eingesetzt werden. Kleine Beschädigungen können dann zum sofortigen Versagen des Verbindungselements führen. Diese Gefahr ist bei einem erfindungsgemäßen Verbindungselement deutlich vermindert.

Der Stahl kann auch für Bauelemente der Anschlag-, Hebe- und Zurrtechnik, insbesondere Kettenglieder, eingesetzt werden und auch für Bauelemente der Verbindungstechnik, also Verbindungselemente. Dies erscheint nicht ohne weiteres naheliegend, denn die einschlägigen Normen für Verbindungselemente, z. B. ISO 898, fordern einen Kohlenstoffgehalt von wenigstens 0,28 Gew.-% und die Belastungen von Kettengliedern und Verbindungselementen, insbesondere Schrauben, sind unterschiedlich.

Durch den geringen Materialeinsatz an Nickel, bzw. den völligen Verzicht auf Nickel, ist der erfindungsgemäße Stahl kostengünstig.

Der erfindungsgemäße Stahl eignet sich besonders zur Verwendung in Bauelementen und Werkstücken, die einerseits hohe Zugfestigkeiten aufweisen müssen, aber gleichzeitig schlagartigen harten mechanischen Belastungen wie Stößen oder Prallvorgängen ausgesetzt sind, insbesondere wenn sie betriebsbedingte Kerben aufweisen. Dies sind insbesondere die bereits genannten Hebe-, Anschlag-, Spann- und/oder Zurrmittel wie beispielsweise Rundstahl- oder Profilketten, Kettenspanner, Anschlagpunkte, Haken etc., sowie insbesondere Antriebskraft übertragende Elemente in Fördersystemen und -anlagen. Diese Beanspruchungen werden durch hohe Zähigkeitswerte beherrscht.

Eine Rundstahlkette mit den Maßen Ø 16 mm x 48 mm weist beispielsweise nach eigenen Versuchen die für die Güteklasse 8 erforderliche Bruchkraft von 320 Kilonewton auch nach einer Anlassbehandlung bei einer Temperatur von bis zu 550°C für eine Stunde auf. Versuche der Anmelderin bei 400, 450, 500 und 550°C haben dies bestätigt. Der erfindungsgemäße Stahl trägt die Bezeichnung 20MnMoCrNb6-4.

Aus dem Stand der Technik ist ein Druckbehälterstahl 18MnMo4-5 (EN 10028-2) bekannt. Es handelt sich dabei um einen grobkörnigen, wärmebeständigen Stahl, dessen Anwendung auf einem völlig anderen Gebiet als der Hebe-, Anschlag-, Spann- und/oder Zurrmittel liegt und der die Anforderungen der Güteklasse 8 und darüber nicht erfüllt. Aufgrund des Anforderungsprofils und der Grobkörnigkeit sind bei hoher Zähigkeit nur geringe Zugfestigkeiten erreichbar.

Insbesondere kann ein Bauteil aus dem erfindungsgemäßen Stahl in verschiedenen Bereichen verschieden behandelt, beispielsweise angelassen werden, sodass in diesen verschiedenen Bereichen unterschiedliche Härten, Zugfestigkeiten und/oder Kerbschlagarbeiten vorliegen.

Im Folgenden werden einige bevorzugte Weiterbildungen der Erfindung erläutert. Die zusätzlichen Merkmale dieser Weiterbildungen können jeweils einzeln oder zusammen mit den Merkmalen anderer Weiterbildungen in beliebiger Kombination angewandt werden.

In einer ersten bevorzugten Weiterbildung beträgt der Anteil in Nickel in Gewichtsprozent weniger als 0,15 oder 0,10 %. Da Nickel sehr teuer ist, ist es wünschenswert, einen möglichst geringen Anteil Nickel im Stahl zu haben. Durch einen Anteil von 0,10 % oder weniger ist es aufgrund der übrigen Legierungszusammensetzung somit möglich, die Kosten weiter zu senken. Insbesondere ist es möglich, einen Stahl herzustellen, der, abgesehen von Verunreinigungen, kein Nickel enthält. Solch ein nickelfreier Stahl spart zusätzlich den Arbeitsschritt des Zusetzens von Nickel.

Gemäß einer weiteren bevorzugten Weiterbildung beträgt der Anteil an Kohlenstoff in Gewichtsprozent zwischen 0,20 und 0,23 %. Durch einen höheren Anteil an Kohlenstoff wird der Stahl fester, allerdings nimmt mit steigendem Kohlenstoffgehalt die Zähigkeit ab. Deshalb ist der bevorzugte Bereich für den Kohlenstoffgehalt auf den vorliegenden Bereich eingeschränkt.

In einer weiteren bevorzugten Weiterbildung der Erfindung beträgt der Anteil an Molybdän in Gewichtsprozent zwischen 0,30 und 0,50 %. Dieser Bereich ist besonders vorteilhaft, um die gewünschte Anlassbeständigkeit bei niedrigen Kosten zu erreichen.

In einer weiteren bevorzugten Weiterbildung der Erfindung beträgt der Anteil an Niob in Gewichtsprozent zwischen 0,01 und 0,06 %.

In einer weiteren bevorzugten Weiterbildung der Erfindung beträgt der Anteil an Aluminium in Gewichtsprozent wenigstens 0,020 und/oder höchstens 0,040 %.

In einer weiteren bevorzugten Weiterbildung liegt der Anteil an Chrom in Gewichtsprozent zwischen 0,20 und 0,40 %. Chrom erhöht die Zugfestigkeit, verringert jedoch die Kerbschlagzähigkeit. Im gesamten Bereich sind diese beiden Effekte gut ausgewogen.

Vorzugsweise beträgt der Anteil an Silizium in Gewichtsprozent zwischen 0,1 und 0,25 %.

Besonders vorteilhaft ist es, wenn die Summe aus dem doppelten Gehalt an Nickel oder Niob, dem etwa 1,6-fachen Gehalt an Titan und/oder dem einfachen Gehalt an Vanadium höchstens etwa 0,16 % (jeweils in Gewichtsprozent) beträgt.

In einer besonders vorteilhaften Ausführung liegt der Stahl mit der erfindungsgemäßen Zusammensetzung in einer extrem feinkörnigen Form mit einer Korngröße feiner als 7 vor. Feinkörniger Stahl hat bei höherer Zugfestigkeit eine höhere Tieftemperaturzähigkeit. Vorzugsweise weist der erfindungsgemäße Stahl bzw. das erfindungsgemäße Bauelement eine Korngröße von 9 bis 10 auf.

In einer weiteren vorteilhaften Ausführung zur Herstellung eines Bauteils aus dem Stahl gemäß der Erfindung umfasst dieses Verfahren das gegebenenfalls wiederholte Härten und/oder Anlassen.

In einer weiteren vorteilhaften Ausführung des erfindungsgemäßen Stahls weist ein aus dem Stahl hergestelltes Hebe-, Anschlag-, Spann- und/oder Zurrmittel eine Bruchfestigkeit von mindestens 800 N/mm², besser mindestens 1200 N/mm² bei der in der jeweiligen Güteklasse für Ketten geforderten Zähigkeit auf. Nimmt man eine geringere Tieftemperaturzähigkeit in Kauf, beispielsweise weil der Stahl nur bei höheren Temperaturen eingesetzt wird, so lassen sich mit dem erfindungsgemäßen Stahl auch höhere Zugfestigkeiten erreichen.

In einer weiteren vorteilhaften Ausführung weist der Stahl oder ein aus dem Stahl hergestelltes Bauteil eine Härte von 400 bis 450 HV30 auf.

In einer weiteren vorteilhaften Ausführung weist der Stahl bzw. ein daraus gefertigtes Bauelement in verschiedenen Bereichen einen Unterschied in der Härte von 80 bis 120 HV30 auf.

In einer besonders vorteilhaften Ausführung behält der Stahl oder ein Bauelement aus dem Stahl bei 380°C, besser noch bei 400°C, am besten bei 410°C über 1 h seine Härte im Wesentlichen bei.

Der Stahl bzw. ein Bauteil aus diesem Stahl weist in einer bevorzugten Ausgestaltung eine Kerbschlagarbeit von wenigstens 30 Joule, bevorzugt wenigstens 45 Joule, weiter bevorzugt von ca. 120 bis 140 Joule bei -40°C auf. Diese Tieftemperaturzähigkeit stellt sicher, dass das Bauelement ausreichende Sicherheiten auch in kalter Umgebung aufweist. Bei -60 °C beträgt die Kerbschlagarbeit wenigstens etwa 50 Joule.

In einer besonders vorteilhaften Ausgestaltung des Verfahrens wird ein Bauelement, beispielsweise ein Kettenglied, das aus dem erfindungsgemäßen Stahl hergestellt wird, in verschiedenen Bereichen verschieden behandelt. Insbesondere kann ein gehärtetes Werkstück in verschiedenen Bereichen mit verschiedenen Anlasstemperaturen behandelt werden. Beispielsweise kann ein Kettenglied im Bereich seines Schenkels mit einer anderen Temperatur behandelt werden als im Bereich des Bugs. Durch ein solches Verfahren entstehen Bereiche mit unterschiedlichen Härte- und Zähigkeitsgraden. Die härteren Bereiche bilden Verschleißflächen, während die weniger harten, aber duktileren Bereiche besonders hohen Widerstand gegen Versagen im Betrieb aufweisen.

In einer besonders vorteilhaften Ausführung des Verfahrens zur Herstellung eines Bauelements, insbesondere eines Kettengliedes, wird das Kettenglied so behandelt, dass es in wenigstens einem Bereich eine Härte von ca. 400 bis 450 HV30 und in wenigstens einem anderen Bereich eine Härte von etwa 365 bis 390 HV30 aufweist und gleichzeitig die Anforderungen der Güteklasse 8 bezüglich Bruchkraft und Bruchdehnung erfüllt. Die Bereiche mit verschiedenen Eigenschaften sind vorzugsweise zusammenhängend, d.h. sie sind miteinander verbunden.

Gemäß einer weiteren vorteilhaften Ausgestaltung kann der Härteunterschied zwischen zwei Bereichen eines erfindungsgemäßen Bauteils etwa 90 bis 110 HV30 betragen. Eine Kette, die aus solchen Kettengliedern besteht, weist besonders vorteilhafte Eigenschaften auf. An Stellen, die einer erhöhten Reib- und/oder Stoßbelastung unterliegen, beispielsweise an den Bugen, kann die Kette eine erhöhte Härte aufweisen. In Bereichen, die vor allem einer mechanischen Zugbelastung oder Biegung im Betrieb unterworfen sind, beispielsweise an den Schenkeln, kann das Kettenglied auch unter ungünstigen Bedingungen einen erhöhten Versagenswiderstand aufweisen.

In einer besonders vorteilhaften Ausführung weist ein Kettenglied eine Härte von ca. 430 bis 470 HV30 in einem Bereich und von ca. 380 bis 395 HV30 in einem anderen Bereich auf und erfüllt gleichzeitig die Erfordernisse der Güteklasse 10.

Insbesondere eignet sich der Stahl für die Verwendung in einem Bauelement der Hebe-, Anschlag-, Spann- und/oder Zurrtechnik, speziell in einer Kette oder einem Kettenglied, und/oder in einem Verbindungselement, beispielsweise einer Schraube.

Besonders vorteilhaft ist die Verarbeitung eines erfindungsgemäßen Stahls in einem Kaltumform- und Härteprozess zur Herstellung eines Verbindungs- und/oder Bauelements mit den oben genannten Eigenschaften.

Nach einer weiteren vorteilhaften Ausgestaltung kann das erfindungsgemäße Verbindungselement Massivmartensit mit Lanzettpaketen im Gefüge aufweisen. Massivmartensit führt zu einer hohen Festigkeit, beeinträchtigt aber im Gegensatz zu den anderen Martensitarten, wie Misch-oder Plattenmartensit, die Tieftemperaturzähigkeit nicht. Massivmartensit entsteht im Zuge der Vergütung bei schroffem Abschrecken aus einer Temperatur oberhalb des AC3-Punktes mit anschließenden Anlasstemperaturen, die unterhalb der Temperatur bleiben, ab der ε-Carbid (Übergangscarbid Fe₂C) zerfällt. Folglich ist es von Vorteil, wenn bei der Herstellung des Verbindungselements die Anlasstemperatur unterhalb der Zerfalltemperatur von ε-Carbid liegt.

In einem Querschnitt durch das Verbindungselement kann der Flächenanteil des Massivmartensits wenigstens 85%, bevorzugt wenigstens 90% betragen. Flächenanteile von mehr als 98 % Massivmartensit in einem Querschnitt dürften kaum zu erreichen sein, so dass dieser Wert als Obergrenze für den Anteil von Massivmartensit angesehen werden kann.

Die Anlasstemperatur im Zuge der Vergütung des Verbindungselements kann zwischen 180°C und 220°C, vorzugsweise um oder exakt bei 200 °C, liegen. Bei diesen Anlasstemperaturen ergeben sich besonders vorteilhafte Kombinationen einer hohen Tieftemperaturzähigkeit mit einer hohen Zugfestigkeit.

Das Verbindungselement kann kalt umgeformte Abschnitte, beispielsweise einen oder mehrere gewalzte oder gerollte Gewindeabschnitte, aufweisen. Die Kaltumformung wird bevorzugt vor der Vergütung durchgeführt.

Aufgrund der oben genannten Stahllegierung zeichnet sich das erfindungsgemäße Verbindungselement gegenüber den bekannten Verbindungselementen durch besondere Kombinationen von mechanischen Kennwerten aus, die sich in erster Linie über die Höhe der Anlasstemperatur einstellen lassen. Bei der erfindungsgemäßen Stahllegierung scheint bei Anlasstemperaturen bis max. 250 °C zu gelten, dass je höher die Anlasstemperatur ist, umso geringer die erreichbare Zugfestigkeit und umso höher die Tieftemperaturzähigkeit wird. Als Kennwert für die Tieftemperaturzähigkeit dient im Folgenden die Kerbschlagarbeit KV, wie sie beispielsweise durch einen Kerbschlagbiegeversuch an V-Kerbproben nach ISO 148-1 ermittelt wird.

Gemäß einer vorteilhaften Ausgestaltung beträgt die Kerbschlagarbeit KV bei einer Temperatur von -40 °C wenigstens 55 Joule bei einer Zugfestigkeit Rₘ von wenigstens 1400 N/mm². Eine obere Grenze für die Kerbschlagarbeit KV bei einer Temperatur von -40 °C und bei einer Zugfestigkeit von wenigstens 1400 N/mm² kann bei 70 J liegen.

Die Kerbschlagarbeit KV bei noch geringeren Temperaturen, insbesondere bei -60°C, und wenigstens 1400 N/mm² kann wenigstens 45 J betragen. Eine Obergrenze der Kerbschlagarbeit KV bei -60 °C kann bei 60 J liegen.

Die Zugfestigkeit Rₘ kann bei einer Kerbschlagarbeit KV von wenigstens 55 J bei -40 °C, und insbesondere höchstens 70 J bei -40 °C, insbesondere zwischen 1500 und 1600 N/mm² liegen.

Das erfindungsgemäße Verbindungselement kann eine Härte von 450 bis 480 HV30 aufweisen.

Das Verbindungselement weist bevorzugt eine feinkörnige Gefügestruktur auf, deren Korngröße 9 oder feiner beträgt. Die Korngröße kann insbesondere 10 betragen. Die Korngröße kann beispielsweise nach ASTM E 112 ermittelt werden.

Nach einer besonders bevorzugten Ausgestaltung kann das Verbindungselement insbesondere aus einem Stahl 20MnMoCrNb6-4 gefertigt sein.

Um eine ausreichende Einhärtbarkeit sicherzustellen, beträgt der Durchmesser des erfindungsgemäßen Verbindungselements in einer Ausgestaltung höchstens zwischen 20 und 25 mm, entsprechend Schraubendurchmessern von höchstens M20 bis M25.

Insbesondere handelt es sich bei dem Verbindungselement um eine Schraube, bevorzugt für ein Anschlagmittel, der Festigkeitsklassen 14.8, 15.8 und/oder 16.8.

Die Anlassbeständigkeit, wie sie beispielsweise in der PAS 1061 für Ketten gefordert ist, kann bei einer Anlasstemperatur von mindestens 380 °C, bevorzugt mindestens 400 °C, noch bevorzugter mindestens 410 °C über 1 Stunde betragen. Bei solchen Anlasstemperaturen kann jedoch die für die Verbindungsmittel der Festigkeitsklassen 14.8 und darüber erforderliche Zugfestigkeit nicht mehr erreicht werden.

Die Erfindung betrifft auch die Verwendung eines Stahls in einer der oben genannten Zusammensetzungen zur Herstellung eines vergüteten und insbesondere wenigstens abschnittsweise angelassenen Verbindungselements, insbesondere einer Schraube.

Die Erfindung betrifft ferner ein Verfahren zur Herstellung eines Verbindungselements, insbesondere einer Schraube, aus einem solchen Stahl mit dem zusätzlichen Schritt des Vergütens. Im Zuge des Vergütens kann das Verbindungselement, wie oben bereits ausgeführt, bei Temperaturen zwischen 180 °C und 220°C, insbesondere um oder bei 200 °C angelassen werden.

Im Folgenden wird die Erfindung anhand eines Ausführungsbeispiels exemplarisch beschrieben. Die in Zusammenhang mit diesem Ausführungsbeispiel beschriebenen Merkmale können nach Maßgabe der obigen Ausführungen beliebig miteinander kombiniert oder weggelassen werden, wenn es auf den mit dem jeweiligen Merkmal verknüpfte Vorteil in einer Anwendung nicht ankommen sollte.

Es zeigen:
- Fig. 1: eine schematische Darstellung eines Kettengliedes, das aus dem erfindungsgemäßen Stahl hergestellt wurde.
- Fig. 2: eine schematische Darstellung eines erfindungsgemäßen Verbindungselements;
- Fig. 3: eine schematische, qualitative Darstellung der Ergebnisse eines Zugversuchs an einer Rundprobe;
- Fig. 4: eine schematische, qualitative Darstellung der Ergebnisse eines statischen Biegeversuchs an Schraubenbolzen unterschiedlicher Festigkeitsklassen;
- Fig. 5: eine schematische, qualitative Darstellung der Kerbschlagarbeit KV bei -40 °C für verschiedene Festigkeitsklassen von Schrauben;
- Fig. 6: eine schematische, qualitative Darstellung der bei einer Temperatur von -40 °C absorbierten Energie beim Bruch von Gewindebolzen M20;
- Fig. 7: eine schematische, qualitative Darstellung der Ergebnisse von Zugversuchen (SOD-Versuche) an geschlitzten Schrauben verschiedener Festigkeitsklassen bei -40°C mit zwei verschiedenen Schlitztiefen;
- Fig. 8: eine schematische, qualitative Darstellung der Bruchkraft und Bruchnennspannung nach den Zugversuchen (SOD-Versuchen) an geschlitzten, erfindungsgemäßen Schrauben bei -40 °C und bei -60 °C als Funktion der Schlitztiefe.

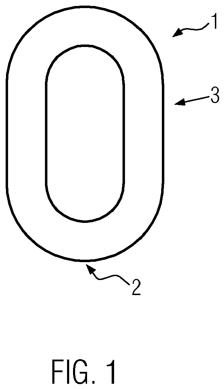

In Fig. 1 ist stellvertretend für Bauelemente der Hebe-, Anschlag-, Spann- und/oder Zurrtechnik ein Kettenglied 1 dargestellt, das aus dem erfindungsgemäßen Stahl hergestellt ist. Beispielsweise kann es sich um ein Rundstahlkettenglied handeln. Die chemische Zusammensetzung, die beispielsweise durch eine chemische Analyse der Schmelze festgestellt werden kann, ist erfindungsgemäß in Gewichtsprozent folgendermaßen: Kohlenstoff 0,17-0,25 %, Nickel 0,00-0,25 %, Molybdän 0,15-0,60 %, Niob 0,01-0,08 % und/oder Titan 0,005-0,1 % und/oder Vanadium ≤ 0,16 %, Aluminium 0,020-0,050 %, Chrom 0,10-0,50 %, Silizium 0,1-0,3%, Mangan 1,40-1,60 %, Phosphor < 0,015 %, Schwefel < 0,015 %, Kupfer < 0,20 %, Stickstoff 0,006-0,014 %, Rest Eisen und unvermeidbare Verunreinigungen.

Insbesondere kann der Nickelanteil kleiner als 0,10 Gewichtsprozent, der Kohlenstoffanteil zwischen 0,20 und 0,23 Gewichtsprozent, der Molybdänanteil zwischen 0,30 und 0,50 Gewichtsprozent, der Niobanteil zwischen 0,01 und 0,06 Gewichtsprozent, der Aluminiumanteil zwischen 0 bzw. 0,020 und 0,040 Gewichtsprozent, der Chromanteil zwischen 0,20 und 0,40 Gewichtsprozent und/oder der Siliziumanteil zwischen 0,1 und 0,25 Gewichtsprozent liegen.

Speziell sollte die Summe aus dem doppelten Gehalt an Nickel (in Gewichtsprozent), dem etwa 1,6-fachen Gehalt an Titan (in Gewichtsprozent) und/oder dem einfachen Gehalt an Vanadium (in Gewichtsprozent) höchstens etwa 0,16 Gewichtsprozent betragen.

Das Kettenglied 1 aus dem erfindungsgemäßen Stahl weist mechanische Eigenschaften auf, die einen guten Kompromiss zwischen Zugfestigkeit und Kerbschlagarbeit darstellen. Wie anhand der Versuchsreihen dargestellt ist, erfüllt der erfindungsgemäße Stahl die Anforderung der Güteklassen 8 und 10 problemlos. Die Herstellung durch den niedrigen Anteil an Nickel bzw. das Weglassen von Nickel im Herstellungsprozess ist kostengünstig, da Nickel teuer ist. Insbesondere kann der erfindungsgemäße Stahl über eine hohe Kerbschlagarbeit im Bereich niedriger Temperaturen, beispielsweise bei -40 °C, und bei hohen Temperaturen, beispielsweise bei 400 °C, über eine hohe Anlassbeständigkeit verfügen.

Um die Eigenschaften des Stahl zu bestimmen, wurde zunächst, wie von den einschlägigen Stahlnormen, z.B. DIN 17115, gefordert, als Referenz ein Zylinder mit Ø16mm untersucht. Nach Glühen bei 880° für ca. ½ h wurde dieser in Wasser abgeschreckt und anschließend bei 450°C für 1 h angelassen und in Luft abgekühlt. Danach zeigte diese Probe einen Rm-Wert von 1213 MPa, einen A5-Wert von 13,1% und einen Z-Wert von 64%. Bei Raumtemperatur wies sie einen Kerbschlagwert von ca. 140 J auf.

Eine Probe, die bei 930 °C für ca 4 h wärmebehandelt und in Wasser abgeschreckt wurde, zeigte eine Korngröße von 8-9. Der Stahl ist also feinkornbeständig.

Um zu zeigen, dass Bauelemente aus dem erfindungsgemäßen Stahl den verschiedenen Güteklassen genügen, hat die Anmelderin verschiedene Versuche durchgeführt. Sämtliche Versuche wurden dabei mit einer Rundstahlkette mit den Maßen Ø 16 mm x 48 mm ausgeführt. Die Ergebnisse für Rundstahlketten lassen sich auf andere typische Anschlag-, Zurr- und Hebemittel übertragen, wie beispielsweise Anschlagpunkte, Spanner, Kettenschlösser etc.

### Versuchsreihe 1

In einem ersten Teil wurde eine Kette nach Härtung aus einer Temperatur oberhalb des Umwandlungspunkts AC3 im Eisen-Kohlenstoff-Diagramm angelassen und dann für ca. eine Stunde bei verschiedenen Temperaturen angelassen. Dabei zeigte die Kette nach verschiedenen Anlasstemperaturen für jeweils eine Stunde die in Tabelle 1 gezeigten Werte zur Zugfestigkeit und Bruchdehnung.

**Tabelle 1**

| **T in °C** | **Fₘₐₓ in kN** | **Aᵣ in %** |
|---|---|---|
| 450 | 372,8 | 26,1 |
| 500 | 354,8 | 28,6 |
| 550 | 346,3 | 30,2 |

Die Anlassversuche zeigen, dass die in Güteklasse 8 geforderten mechanischem Eigenschaften auch bei hohen Temperaturen bis zum Beginn des Kriechbereichs aufrecht erhalten bleiben. Bei einer Anlasstemperatur von 400 °C für ca. eine Stunde wies sie eine Kerbschlagarbeit von ca. 130 J bei -40°C auf. Der erfindungsgemäße Stahl ist somit sowohl tieftemperaturzäh als auch warmfest.

Die Kette erreicht also nach Tabelle 1 die für die Güteklasse 8 bei einer derartigen Rundstahlkette erforderliche Mindestbruchkraft von 320 kN, bzw. Mindestbruchfestigkeit von 800 N/mm².

Nach dieser Versuchsreihe erfüllt eine Kette aus dem erfindungsgemäßen Stahl die mechanischen Anforderungen der Güteklasse 8 nach ISO 3076 und DIN EN 818-2.

### Versuchsreihe 2

Die Kette wurde aus einer Temperatur oberhalb AC3 gehärtet, angelassen und anschließend für ca. eine Stunde bei 380°C wieder angelassen. Dabei zeigte sich eine Zugfestigkeit von ca. 435 kN bei einer Bruchdehnung von 31 %. Die Kette weist also die erforderliche Mindestbruchkraft von 400 kN bzw. von 1000 N/mm² nach Wiedererwärmung auf.

Versuchsreihe 2 zeigt, dass eine Kette aus dem erfindungsgemäßen Stahl auch die Anforderungen der PAS 1061 erfüllt und somit für Ketten der Güteklasse 10 geeignet ist.

### Versuchsreihe 3

In einer dritten Versuchsreihe wurde ein Kettenglied nach einer Härtung aus einer Temperatur oberhalb AC3 bei einer Temperatur zwischen 180 °C und 220°C angelassen. Ein derart behandeltes Kettenglied wies eine Kerbschlagbiegearbeit von mehr als 50 J bei -40°C und von ca. 50 J bei -60 °C auf. Die Mindestbruchkraft lag deutlich über 420 kN bei knapp über 490 kN. Ein solches Kettenglied kann also für Anwendungen bei sehr tiefen Temperaturen benutzt werden.

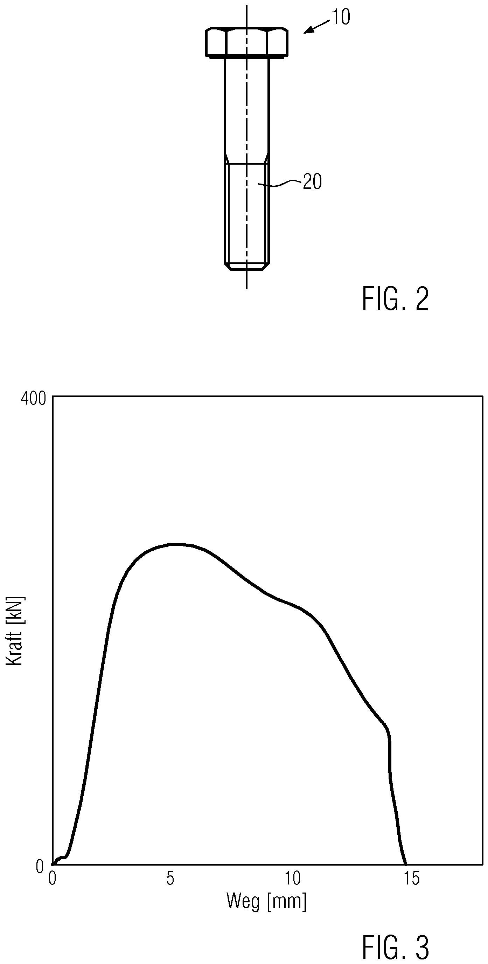

Die Figur 2 zeigt beispielhaft ein Verbindungselement 10 in Form einer Schraube. Die Schraube ist mit einem kalt umgeformten, insbesondere gewalzten Gewindeabschnitt 20 versehen und vergütet.

Das Verbindungselement 10 ist aus einem Stahl gefertigt, der folgende Legierungsbestandteile aufweist:
Kohlenstoff: 0,15 bis 0,25 Gew.-%, insbesondere 0,20 bis 0,23 Gew.-%,
Nickel 0,00 bis 0,25 Gew.-%, insbesondere 0,00 bis 0,10 Gew.-%,
Molybdän: 0,15 bis 0,60 Gew.-%, insbesondere 0,30 bis 0,50 Gew.-%,
Niob: 0,01 bis 0,8 Gew.-% und/oder Titan: 0,005 bis 0,01 Gew.-% und/oder Vanadium: ≤ 0,16%, wobei Niob insbesondere einen Anteil von 0,01 bis 0,06 Gew.-% aufweisen kann,
Aluminium: 0 bis 0,050 Gew.-%, insbesondere 0,020 bis 0,040 Gew.-%,
Chrom: 0,10 bis 0,50 Gew.-%, insbesondere 0,20 bis 0,40 Gew.-%,
Silizium: 0,1 bis 0,3 Gew.-%, insbesondere 0,1 bis 0,25 Gew.-%,
Mangan: 1,40 bis 1,60 Gew.-%,
Phosphor: < 0,015 Gew.-%,
Schwefel: < 0,015 Gew.-%,
Kupfer: < 0,20 Gew.-%,
Stickstoff: 0,006 bis 0,14 Gew.-%.
Der Rest des Stahls ist Eisen und unvermeidbare Verunreinigungen.

Die Summe aus dem doppelten Gehalt in Gewichtsprozent an Nickel, dem etwa 1,6-fachen an Titan und/oder dem einfachen Gehalt an Vanadium, jeweils in Gewichtsprozent gemessen, sollte bevorzugt höchstens etwa 0,16 Gew.-% betragen.

Eine erste Versuchsreihe zu diesem Stahl wurde im Hinblick auf Eignung zur Herstellung von Kettengliedern durchgeführt. Diese Versuche lassen auch auf seine Eignung zur Herstellung von Verbindungselementen 10 schließen.

### Versuch 1.1

Zunächst wurde nach DIN 17115 als Referenz ein Zylinder mit Durchmesser 16 mm aus dem oben beschriebenen Stahl untersucht. Nach Glühen bei 880 °C für ca. eine halbe Stunde wurde der Zylinder in Wasser abgeschreckt und anschließend bei 450 °C für eine Stunde angelassen und in Luft abgekühlt. Danach zeigte diese Probe eine Zugfestigkeit Rₘ von 1213 N/mm², einen A₅-Wert von 13,1% und einen Z-Wert von 64%. Bei Raumtemperatur wies die Probe einen Kerbschlagwert von ca. 140 J auf.

Aus diesem Versuch lässt sich folgern, dass bei einer Anlasstemperatur zwischen 180°C und 220 °C, insbesondere um 200°C, wesentlich höhere Werte für die Zugfestigkeit Rₘ erreicht werden. Die Zugfestigkeit bei einer solchen Anlasstemperatur sollte bei wenigstens 1400 N/mm², insbesondere über 1500 N/mm² bis hin zu etwa 1600 N/mm² ggf. leicht darüber, liegen, so dass Schrauben der Festigkeitsklasse von 14.8, 15.8 und 16.8 zu erreichen sind.

### Versuch 1.2

Eine Probe, die bei 930 °C für ca. vier Stunden wärmebehandelt und in Wasser abgeschreckt wurde, zeigte eine ASTM Korngröße von 8 bis 9. Der Stahl ist also feinkornbeständig.

Bei Anlasstemperaturen von 180 °C bis 220 °C und geringeren Anlasszeiten, beispielsweise um 1 Stunde, ist mit noch feineren Korngrößen, um ASTM 10, zu rechnen. Körngrößen um ASTM 10 lassen sich auch mit einer Wärmebehandlung bei niedrigeren Temperaturen und/oder einer geringeren Dauer erreichen.

### Versuch 1.3

Um zu zeigen, dass Rundstahlketten und andere typische Anschlag-, Zurr- und Hebemittel, wie beispielsweise Anschlagpunkte, Spanner, Kettenschlösser etc. aus dem obigen Stahl, der für diese Bauelemente zutreffenden Güteklassen genügen, wurden weitere Versuche ausgeführt. Diese Versuche wurden mit einer Rundstahlkette mit den Maßen Durchmesser 16 mm x 48 mm durchgeführt.

### Versuchsreihe 1.3.a

In einer ersten Versuchsreihe wurde die Rundstahlkette 16 x 48 nach dem Härten auf einer Temperatur oberhalb des Umwandlungspunktes AC3 im Eisen-Kohlenstoff-Diagramm geglüht und dann für ca. eine Stunde bei verschiedenen Temperaturen angelassen. Dabei zeigte die Kette nach verschiedenen Anlasstemperaturen die in Tabelle 2 gezeigten Werte zur Zugfestigkeit und Bruchdehnung.

**Tabelle 2**

| **T °C** | **Fₘₐₓ in kN** | **Aᵣ %** |
|---|---|---|
| 450 | 372,8 | 26,1 |
| 500 | 354,8 | 28,6 |
| 550 | 346,3 | 30,2 |

Die Anlassversuche zeigen, dass der Stahl warmfest ist. Da bei einer Anlasstemperatur von 400 °C für ca. eine Stunde eine Kerbschlagarbeit von ca. 130 J bei -40 °C nachgewiesen werden konnte, ist der obige Stahl für das Verbindungselement 1 sowohl tieftemperaturzäh als auch warmfest. Wie Tabelle 2 belegt, steigt mit sinkender Anlasstemperatur die Bruchlast, während die Bruchdehnung sinkt.

Im Kettenglied wird eine Mindestbruchfestigkeit von 800 N/mm² erreicht.

### Versuchsreihe 1.3.b

Die Kette wurde aus einer Temperatur oberhalb AC3 gehärtet, angelassen und anschließend für ca. eine Stunde bei 380°C wieder angelassen. Dabei zeigte sich bei dem Kettenglied eine Zugfestigkeit von ca. 435 kN bei einer Bruchdehnung von 31%. Die Kette weist also bei Wiedererwärmung eine Mindestbruchfestigkeit von 1000 N/mm² auf.

### Versuchsreihe 1.3.c

In einer dritten Versuchsreihe wurde ein Kettenglied nach einer Härtung aus einer Temperatur oberhalb AC3 bei einer Temperatur zwischen 180 °C und 220°C angelassen. Ein derartig behandeltes Kettenglied wies eine Kerbschlagbiegearbeit KV nach DIN EN 10045 von mehr als 50 J bei -40 °C und von ca. 50 J bei -60°C auf. Die Mindestbruchkraft lag bei knapp über 490 kN im Kettenglied. Auch hieraus lässt sich auf eine Zugfestigkeit Rₘ von mehr als 1400 N/mm², insbesondere zwischen 1500 N/mm² und 1600 N/mm² bei einem Verbindungselement wie einer Schraube schließen, wenn man den mehrdimensionaleren Spannungszustand des Verbindungselements berücksichtigt.

Bei einer zweiten Reihe von Versuchen wurde der Stahl aus einer Temperatur oberhalb des AC3-Punktes abgeschreckt und dann zwischen 180° und 220°C angelassen. Nach dieser Vergütung wiesen die Proben in einem Querschnitt bzw. Gefügebild einen Flächenanteil an Massivmartensit zwischen 85% bzw. 90% und 98% auf.

Ausgangsmaterial für sämtliche Proben war ein Gewindebolzen M20.

### Versuch 2.1.a

Ein Zugversuch nach ISO 6892-1 bei einer Temperatur von 20°C an der aus dem Schraubenbolzen M20 abgedrehten Rundprobe mit einem Außendurchmesser von 15 mm ergibt qualitativ den in Fig. 2 dargestellten Verlauf.

Die Streckgrenze R_{P0,2} der abgedrehten Rundprobe liegt demnach zwischen 1250 und 1350 N/mm². Die Zugfestigkeit Rₘ liegt über 1400 N/mm², zwischen 1500 und 1600 N/mm².

Die Bruchdehnung A₅ liegt oberhalb von 13% bis maximal 18%, im Bereich von etwa 15%. Die Brucheinschnürung Z ist höher als 48%, bis hin zu etwa 55%, im Bereich um 51%.

### Versuch 2.1.b

Würde eine aus dem Schraubenbolzen M20 abgedrehte Rundprobe mit einem Außendurchmesser von 15 mm bei etwa 200° C angelassen, um eine hohe Zugfestigkeit Rₘ zu erhalten, so ergäben sich folgende Werte: Rₘ = 1550 ... 1600 N/mm², R_{P0,2} = 1300 ... 1350 N/mm², A₅ = 8 ... 12%, Z = 40 ... 50%.

Aus den Ergebnissen des Zugversuchs gemäß Figur 3 lässt sich schließen, dass das erfindungsgemäße Verbindungselement eine sehr hohe Zugfestigkeit und gleichzeitig eine hohe Duktilität bei Raumtemperatur aufweist. Aufgrund der Ergebnisse des Zugversuchs wird, so weit im Folgenden Versuche an einem erfindungsgemäß ausgestalteten Schraubenbolzen durchgeführt werden, dieser mit der Festigkeitsklasse 15.8 bezeichnet.

### Versuch 2.1.c

Ein weiterer Versuch mit einer weiteren Rundprobe, die ebenfalls aus einem Bolzen M20 aus dem erfindungsgemäßen Stahl geschnitten wurde, wies nach einer Anlasstemperatur von 300° C eine Brucheinschnürung Z im Bereich 60 ... 70% auf. Aufgrund der hohen Anlasstemperatur betrug die Zugfestigkeit Rₘ 1425 ... 1475 N/mm².

### Versuch 2.2

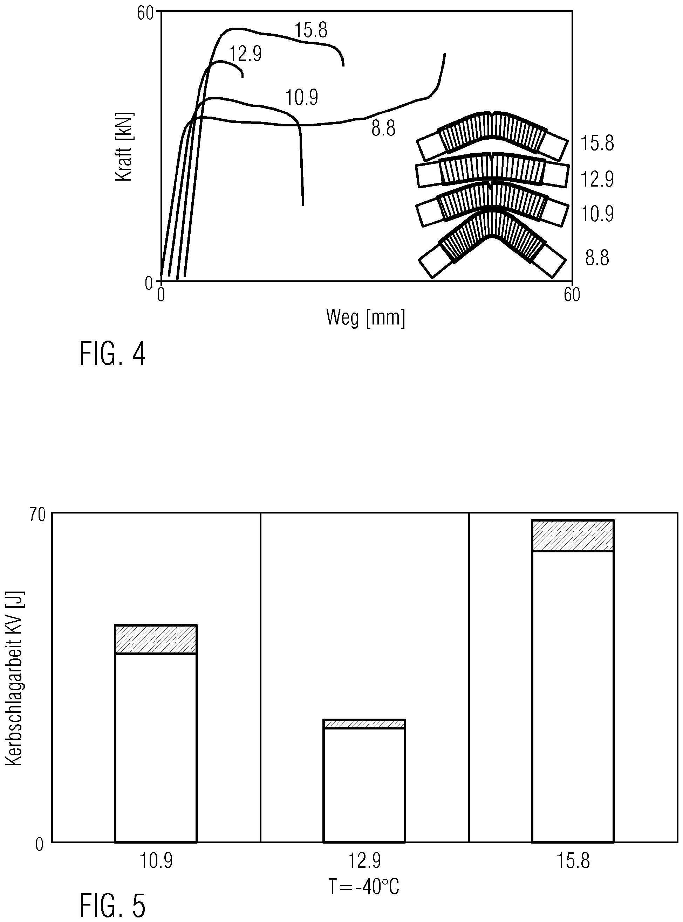

In Figur 4 sind die Ergebnisse eines statischen Biegeversuchs an Schraubenbolzen M20 der Festigkeitsklassen 8.8, 10.9, 12.9 und 15.8 qualitativ dargestellt und, rechts unten, die Proben am Ende des Versuchs gezeigt. Das erfindungsgemäß ausgestaltete Verbindungselement der Festigkeitsklasse 15.8 ist dabei mit handelsüblichen Verbindungselementen der Klassen 8.8, 10.9 und 12.9 verglichen.

Der Biegeversuch wurde an 120 mm langen Schraubenbolzen und mit einem Stempel mit 20 mm Radius durchgeführt. Die Schraubenbolzen lagen auf den Schrägflächen eines 90° Prismas auf.

Es zeigt sich, dass das erfindungsgemäß ausgestaltete Verbindungselement nicht nur eine wesentlich höhere Biegelast aufnehmen kann, sondern dass auch die Verformbarkeit des erfindungsgemäßen Verbindungselements die Verformbarkeit der Schrauben geringerer Festigkeitsklassen 12.9 und 10.9 übertrifft. So übersteht eine erfindungsgemäße Schraube M20 eine Biegeverformung von 24 mm. Bei dieser Verformung sind die Schrauben der Festigkeitsklassen 12.9 und 10.9 bereits gebrochen.

### Versuch 2.3

In weiteren Versuchen wurde die Tieftemperaturzähigkeit eines erfindungsgemäßen Gewindebolzens M20 untersucht. Hierzu wurde ein Kerbschlagbiegeversuch nach ISO 148-1 bei -40 °C durchgeführt. Die qualitativen Ergebnisse, wieder im Vergleich zu Verbindungselementen niedriger Festigkeitsklassen, hier 10.9 und 12.9, zeigt die Figur 5.

Die sich nach diesen Versuchen bei dem erfindungsgemäßen Verbindungselement 15.8 ergebende Kerbschlagarbeit KV bei -40 °C von über 60 J bis hin zu etwa 69 J liegt deutlich über den Werten der Kerbschlagarbeit KV für die ansonsten identischen ISO-V-Proben aus den Schraubenbolzen der Festigkeitsklassen 10.9 und 12.9.

Die Verbindungselemente in der erfindungsgemäßen Ausgestaltung weisen folglich eine hohe Tieftemperaturzähigkeit auf, die die Tieftemperaturzähigkeit der niedrigeren Festigkeitsklassen übersteigt.

### Versuch 2.4

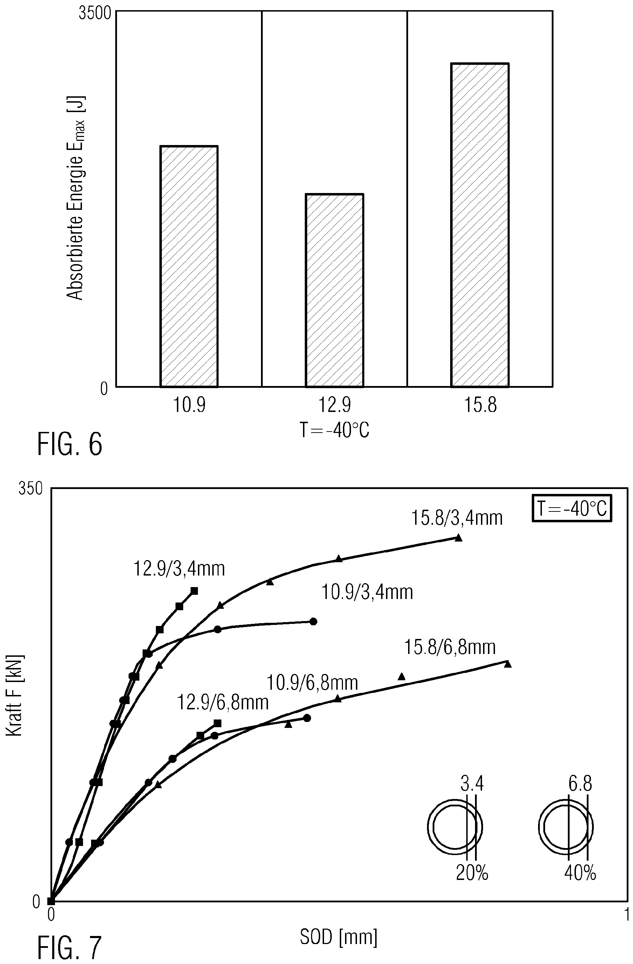

Die hohe Tieftemperaturzähigkeit eines erfindungsgemäß ausgestalteten Verbindungselements, die trotz einer wesentlich höheren Festigkeit die Tieftemperaturzähigkeit der niedrigeren Festigkeitsklassen übersteigt, ist auch in Figur 5 zu erkennen. Figur 6 zeigt qualitativ die absorbierte Energie beim Bruch von Gewindebolzen M20 bei einer Prüftemperatur von -40 °C.

Demnach absorbiert ein erfindungsgemäßer Gewindebolzen M20 bei -40 °C deutlich mehr Energie als die Gewindebolzen M20 der Festigkeitsklassen 10.9 und 12.9. Bei Tieftemperaturanwendungen bietet das Mehr an absorbierter Energie bei dem erfindungsgemäß ausgestalteten Verbindungselement eine höhere Betriebssicherheit.

### Versuch 2.5

In einer weiteren Versuchsreihe wurde das Zähigkeitsverhalten erfindungsgemäßer Verbindungselemente im Vergleich zu herkömmlichen Verbindungselementen niedrigere Festigkeitsklassen bei -40 °C mit Hilfe von SOD-Versuchen untersucht.

Bei den SOD ("*Slit Opening Displacement"*)-Versuchen wird an den Schrauben M20 ein sekantenparalleler Schlitz in einige Proben mit einer Tiefe von 3,4 mm und in andere Proben mit einer Tiefe von 6,8 mm, gemessen von der Kerntiefe des Gewindes, eingebracht (s. Fig. 6). Die Schlitztiefe entspricht damit 20% (Schlitztiefe 3,4 mm) bzw. 40% (Schlitztiefe 6,8 mm) des Durchmessers. Anschließend werden die Schrauben unter Zug belastet. Über einen Dehnmessstreifen am Außendurchmesser gegenüber der tiefsten Stelle des Schlitzes wird die Öffnung des Schlitzes mit zunehmender Zugbelastung erfasst.

Qualitativ ist das Ergebnis der SOD-Versuche in Figur 7 dargestellt.

Es ist zu erkennen, dass im Vergleich zu den Schrauben 10.9 und 12.9 bis zum Bruch der Schraube vom erfindungsgemäßen Verbindungselement die größten absoluten Kräfte aufgenommen werden können.

Ferner geht aus den Versuchsergebnissen nach Figur 7 hervor, dass bei den erfindungsgemäßen Verbindungselementen ein Bruch erst eintritt, wenn sich der Schlitz bereits stark geweitet hat. Während eine Schraube M20 der Festigkeitsklasse 12.9 in etwa unabhängig von der Schlitztiefe nach einer Weitung des Schlitzes um ca. 0,3 mm und eine Schraube der Festigkeitsklasse 10.9, ebenfalls in etwa unabhängig von der Schlitztiefe, bei einer Schlitzweitung um ca. 0,5 mm bricht, toleriert ein erfindungsgemäßes Verbindungselement aus dem obigen Stahl eine Aufweitung des Schlitzes um deutlich mehr als 0,5 mm, nämlich bis über 0,7 mm.

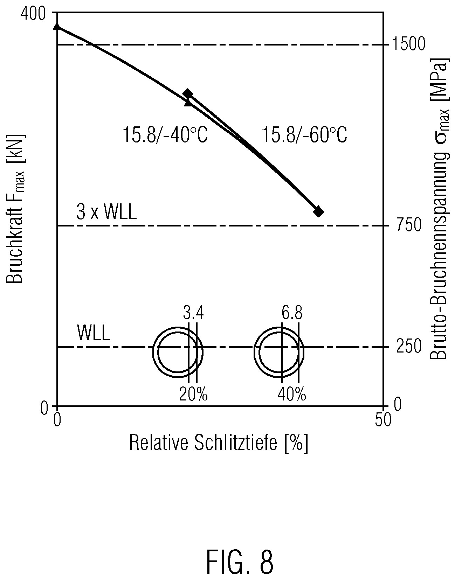

Aus den SOD-Versuchen lässt sich folgern, dass selbst bei einer Temperatur von -40°C ein erfindungsgemäß ausgestaltetes Verbindungselement die zulässige Tragfähigkeit (*"Working Load Limit*", WLL) für Anschlagschrauben selbst bei -40 °C und bei Beschädigung nicht unterschreitet. So gilt bei Anschlagschrauben ein Sicherheitsfaktor von 6 gegenüber der Zugfestigkeit als zulässige Tragfähigkeit. Eine Schraube der Festigkeitsklasse 15.8 mit einer Zugfestigkeit von 1500 kN darf folglich als Anschlagschraube maximal mit nur 1500 kN/6 = 250 kN belastet werden. Bei -40 °C besteht bei dem erfindungsgemäßen Verbindungselement jedoch eine mehr als dreifache Restsicherheit gegenüber dem *Working Load Limit.* Diese Sicherheit besteht selbst noch bei -60 °C. In Figur 8 sind die Zugfestigkeit, der *Working Load Limit* WLL und der dreifache *Working Load Limit* durch Strichpunktlinien gekennzeichnet.

Sämtliche Versuche zeigen, dass das erfindungsgemäß ausgestaltete Verbindungselement eine extrem hohe Festigkeit mit einer extrem hohen Tieftemperaturzähigkeit verbindet. Sowohl hinsichtlich Biegefestigkeit, als auch hinsichtlich Kerbschlagarbeit und Bruchfestigkeit der SOD-Proben sind die erfindungsgemäßen Verbindungselemente den bekannten Verbindungselementen überlegen.

## Patentansprüche

1. Härtbarer Stahl für Hebe-, Anschlag-, Spann- und/oder Zurrmittel der Güteklasse 8 und darüber mit der folgenden Zusammensetzung in Gewichtsprozent:
Kohlenstoff 0,17-0,25 %
Nickel 0,00-0,25 %
Molybdän 0,15-0,60 %
Niob 0,01-0,08 % und/oder Titan 0,005-0,1 % und/oder Vanadium ≤ 0,16 %
Aluminium 0-0,050 %
Chrom 0,10-0,50 %
Silizium 0,1-0,3%
Mangan 1,40-1,60 %
Phosphor < 0,015 %
Schwefel < 0,015 %
Kupfer < 0,20 %
Stickstoff 0,006-0,014 %
Rest Eisen und unvermeidbare Verunreinigungen.

2. Stahl nach Anspruch 1, **dadurch gekennzeichnet, dass** der Anteil an Nickel in Gewichtsprozent weniger als 0,15 % beträgt.

3. Stahl nach Anspruch 1 oder 2, **dadurch gekennzeichnet, dass** der Anteil an Kohlenstoff in Gewichtsprozent zwischen 0,20 und 0,23 % liegt.

4. Stahl nach einem der Ansprüche 1 bis 3, **dadurch gekennzeichnet, dass** der Anteil an Molybdän in Gewichtsprozent zwischen 0,30 und 0,50 % liegt.

5. Stahl nach einem der Ansprüche 1 bis 4, **dadurch gekennzeichnet, dass** der Anteil an Niob in Gewichtsprozent zwischen 0,01 und 0,06 % liegt.

6. Stahl nach einem der Ansprüche 1 bis 5, **dadurch gekennzeichnet, dass** der Anteil an Aluminium in Gewichtsprozent wenigstens 0,020 und/oder höchstens 0,040 % beträgt.

7. Stahl nach einem der Ansprüche 1 bis 6, **dadurch gekennzeichnet, dass** der Anteil an Chrom in Gewichtsprozent zwischen 0,20 und 0,40 % liegt.

8. Stahl nach einem der Ansprüche 1 bis 7, **dadurch gekennzeichnet, dass** der Anteil an Silizium in Gewichtsprozent zwischen 0,1 und 0,25 % liegt.

9. Verbindungs- und/oder Bauelement, insbesondere eine Schraube oder ein Kettenglied für ein Hebe-, Anschlag-, Spann- und/oder Zurrmittel, **dadurch gekennzeichnet, dass** es zumindest teilweise aus einem Stahl nach einem der Ansprüche 1 bis 8 gefertigt ist.

10. Verbindungs- oder Bauelement nach Anspruch 9, **dadurch gekennzeichnet, dass** der Stahl in verschiedenen, zusammenhängenden Bereichen verschiedene Härten und/oder Festigkeiten und/oder Kerbschlagarbeiten aufweist.

11. Verbindungs- oder Bauelement nach Anspruch 9 oder 10, **dadurch gekennzeichnet, dass** es eine Härte von 400 bis 480 HV30 aufweist.

12. Verbindungs- oder Bauelement nach einem der Ansprüche 9 bis 11, **dadurch gekennzeichnet, dass** es in verschiedenen Bereichen einen Unterschied in der Härte von 80 bis 120 HV30 aufweist.

13. Verbindungs- oder Bauelement nach einem der Ansprüche 9 bis 12, **dadurch gekennzeichnet, dass** es eine Mindestbruchspannung von mindestens 800 N/mm², bevorzugt mindestens 1200 N/mm² aufweist.

14. Verbindungs- oder Bauelement nach einem der Ansprüche 9 bis 13, **dadurch gekennzeichnet, dass** es die Korngröße 9 oder feiner aufweist.

15. Verbindungselement nach einem der Ansprüche 9 bis 14, **dadurch gekennzeichnet, dass** es eine Kerbschlagarbeit KV von wenigstens 55 J bei -40 °C und einer Zugfestigkeit Rₘ von wenigstens 1400 N/mm² aufweist.

16. Verbindungselement nach einem der Ansprüche 9 bis 15, **dadurch gekennzeichnet, dass** die Kerbschlagarbeit KV bei -60 °C und einer Zugfestigkeit Rₘ von wenigstens 1400 N/mm² wenigstens 45 J beträgt.

17. Verbindungselement nach einem der Ansprüche 9 bis 16, **dadurch gekennzeichnet, dass** die Zugfestigkeit Rₘ zwischen 1500 und 1600 N/mm² liegt.

18. Verbindungselement nach einem der Ansprüche 9 bis 17, **dadurch gekennzeichnet, dass** in einem Querschnitt des Verbindungselements ein Flächenanteil von wenigstens 85% von Massivmartensit eingenommen ist.

19. Verbindungselement nach einem der Ansprüche 9 bis 18 **dadurch gekennzeichnet, dass** das Verbindungselement eine Schraube der Festigkeitsklasse 14.8, 15.8 oder 16.8 ist.

20. Verarbeitung eines Stahls nach einem der Ansprüche 1 bis 8 in einem Kaltumform- und Härteprozess zur Herstellung eines Bauelements nach einem der Ansprüche 9 bis 14 oder eines Verbindungselements nach einem der Ansprüche 9 bis 19.

21. Verwendung des Stahls nach einem der Ansprüche 1 bis 8 für ein Verbindungselement, insbesondere eine Schraube, oder Bauelement der Hebe-, Anschlag-, Spann- und/oder Zurrtechnik, insbesondere eine Kette oder ein Kettenglied.

## Claims

1. Hardening steel for lifting, fastening, clamping and/or lashing means of quality grade 8 and above having the following composition in weight percent:
carbon 0.17 - 0.25 %
nickel 0.00 - 0.25 %
molybdenum 0.15 - 0.60 %
niobium 0.01 - 0.08 % and/or titanium 0.005 - 0.1 % and/or vanadium ≤ 0.16 %
aluminium 0 - 0.050 %
chromium 0.10 - 0.50 %
silicon 0.1 - 0.3 %
manganese 1.40 - 1.60 %
phosphorus < 0.015 %
sulphur < 0.015 %
copper < 0.20 %
nitrogen 0.006 - 0.014 %
remainder of iron and unavoidable impurities.

2. Steel according to claim 1 **characterized in that** the nickel content in weight percent is less than 0.15 %.

3. Steel according to claim 1 or **2 characterized in that** the carbon content in weight percent is between 0.20 and 0.23 %.

4. Steel according to any one of claims 1 to 3 **characterized in that** the molybdenum content in weight percent is between 0.30 and 0.50 %.

5. Steel according to any one of claims 1 to 4 **characterized in that** the niobium content in weight percent is between 0.01 and 0.06 %.

6. Steel according to any one of claims 1 to 5 **characterized in that** the aluminium content in weight percent is at least 0.020 and/or at most 0.040 %.

7. Steel according to any one of claims 1 to 6 **characterized in that** the chromium content in weight percent is between 0.20 and 0.40 %.

8. Steel according to any one of claims 1 to 7 **characterized in that** the silicon content in weight percent is between 0.1 and 0.25 %.

9. Connecting element and/or component, especially a bolt or a chain link for lifting, fastening, clamping and/or lashing means, **characterized in that** it is at least partially made from a steel according to any one of claims 1 to 8.

10. Connecting element or component according to claim 9 **characterized in that** the steel has in different, connected sections different hardnesses and/or strengths and/or notch impact energies.

11. Connecting element or component according to claim 9 or 10 **characterized in that** it has a hardness of 400 to 480 HV30.

12. Connecting element or component according to any one of claims 9 to 11 **characterized in that** it has in different sections a difference in hardness of 80 to 120 HV30.

13. Connecting element or component according to any one of claims 9 to 12 **characterized in that** it has a minimum breaking stress of at least 800 N/mm², preferably at least 1200 N/mm².

14. Connecting element or component according to any one of claims 9 to 13 **characterized in that** it has grain size 9 or finer.

15. Connecting element according to any one of claims 9 to 14 **characterized in that** it has a notch impact energy KV of at least 55 J at -40°C and a tensile strength Rₘ of at least 1400 N/mm².

16. Connecting element according to any one of claims 9 to 15 **characterized in that** the notch impact energy KV is at least 45 J at -60°C and at a tensile strength Rₘ of at least 1400 N/mm².

17. Connecting element according to any one of claims 9 to 16 **characterized in that** the tensile strength Rₘ is between 1500 and 1600 N/mm².

18. Connecting element according to any one of claims 9 to 17 **characterized in that** in a cross-section of the connecting element the area percentage of lath martensite is at least 85%.

19. Connecting element according to any one of claims 9 to 18 **characterized in that** the connecting element is a bolt of property grade 14.8, 15.8 or 16.8.

20. Treatment of a steel according to any one of claims 1 to 8 in a cold forming and hardening process for the production of a component according to any one of claims 9 to 14 or a connecting element according to any one of claims 9 to 19.

21. Use of the steel according to any one of claims 1 to 8 for a connecting element, especially a bolt, or a component of the lifting, fastening, clamping and/or lashing technology , especially a chain or a chain link.

## Revendications

1. Acier durcissable pour moyens de levage, d'accrochage, de serrage et/ou d'arrimage de la classe de qualité 8 et plus, ayant la composition suivante en pourcentage en poids :
carbone 0,17 à 0,25 %
nickel 0,00 à 0,25 %
molybdène 0,15 à 0,60 %
niobium 0,01 à 0,08 % et/ou titane 0,005 à 0,1 % et/ou vanadium ≤ 0,16 %
aluminium 0 à 0,050 %
chrome 0,10 à 0,50 %
silicium 0,1 à 0,3 %
manganèse 1,40 à 1,60 %
phosphore < 0,015 %
soufre < 0,015 %
cuivre < 0,20 %
azote 0,006 à 0,014 %
le reste étant du fer et des impuretés inévitables.

2. Acier selon la revendication 1, **caractérisé en ce que** la proportion de nickel en pourcentage en poids est de moins de 0,15 %.

3. Acier selon la revendication 1 ou 2, **caractérisé en ce que** la proportion de carbone en pourcentage en poids est comprise entre 0,20 et 0,23 %.

4. Acier selon l'une quelconque des revendications 1 à 3, **caractérisé en ce que** la proportion de molybdène en pourcentage en poids est comprise entre 0,30 et 0,50 %.

5. Acier selon l'une quelconque des revendications 1 à 4, **caractérisé en ce que** la proportion de niobium en pourcentage en poids est comprise entre 0,01 et 0,06 %.

6. Acier selon l'une quelconque des revendications 1 à 5, **caractérisé en ce que** la proportion d'aluminium en pourcentage en poids est d'au moins 0,020 et/ou d'au plus 0,040 %.

7. Acier selon l'une quelconque des revendications 1 à 6, **caractérisé en ce que** la proportion de chrome en pourcentage en poids est comprise entre 0,20 et 0,40 %.

8. Acier selon l'une quelconque des revendications 1 à 7, **caractérisé en ce que** la proportion de silicium en pourcentage en poids est comprise entre 0,1 et 0,25 %.

9. Élément de liaison et/ou de construction, notamment vis ou maillon pour un moyen de levage, d'accrochage, de serrage et/ou d'arrimage, **caractérisé en ce qu'**il est fabriqué au moins partiellement en un acier selon l'une quelconque des revendications 1 à 8.

10. Élément de liaison ou de construction selon la revendication 9, **caractérisé en ce que** l'acier présente dans des zones connexes différentes des duretés et/ou des résistances et/ou des résiliences différentes.

11. Élément de liaison ou de construction selon la revendication 9 ou 10, **caractérisé en ce qu'**il présente une dureté de 400 à 480 HV30.

12. Élément de liaison ou de construction selon l'une quelconque des revendications 9 à 11, **caractérisé en ce qu'**il présente dans différentes zones une différence de dureté de 80 à 120 HV30.

13. Élément de liaison ou de construction selon l'une quelconque des revendications 9 à 12, **caractérisé en ce qu'**il présente une tension de rupture minimale d'au moins 800 N/mm², de préférence d'au moins 1 200 N/mm².

14. Élément de liaison ou de construction selon l'une quelconque des revendications 9 à 13, **caractérisé en ce qu'**il présente la taille de grain 9 ou moins.

15. Élément de liaison selon l'une quelconque des revendications 9 à 14, **caractérisé en ce qu'**il présente une résilience KV d'au moins 55 J à -40 °C et une résistance à la traction Rₘ d'au moins 1 400 N/mm².

16. Élément de liaison selon l'une quelconque des revendications 9 à 15, **caractérisé en ce que** la résilience KV à -60 °C et à une résistance à la traction Rₘ d'au moins 1 400 N/mm² est d'au moins 45 J.

17. Élément de liaison selon l'une quelconque des revendications 9 à 16, **caractérisé en ce que** la résistance à la traction Rₘ est comprise entre 1 500 et 1 600 N/mm².

18. Élément de liaison selon l'une quelconque des revendications 9 à 17, **caractérisé en ce qu'**une proportion de surface d'au moins 85 % dans une section transversale de l'élément de liaison est occupée par de la martensite massive.

19. Élément de liaison selon l'une quelconque des revendications 9 à 18, **caractérisé en ce que** l'élément de liaison est une vis de la classe de résistance 14,8, 15,8 ou 16,8.

20. Usinage d'un acier selon l'une quelconque des revendications 1 à 8 dans un procédé de façonnage et de durcissement à froid pour la fabrication d'un élément de construction selon l'une quelconque des revendications 9 à 14 ou d'un élément de liaison selon l'une quelconque des revendications 9 à 19.

21. Utilisation de l'acier selon l'une quelconque des revendications 1 à 8 dans un élément de liaison, notamment une vis, ou un élément de construction de la technique de levage, d'accrochage, de serrage et/ou d'arrimage, notamment une chaîne ou un maillon.
